# EUROPEAN PATENT APPLICATION

(11) **EP 2 530 761 A1**
(43) Date of publication of application: **05.12.2012**
(21) Application number: 11737040.3
(22) Date of filing: 26.01.2011
(51) Int. Cl.: H01M 2/10

(54) **BATTERY PACK**

(30) Priority: 28.01.2010 JP 2010017500
(71) Applicant: Sanyo Electric Co., Ltd., Osaka 570-8677 (JP)
(72) Inventor: MIYAMAE, Ichiro, Moriguchi-shi Osaka 570-8677 (JP); UEHARA, Yuji, Moriguchi-shi Osaka 570-8677 (JP); KAWABATA, Masahiro, Moriguchi-shi Osaka 570-8677 (JP)
(74) Representative: Hertz, Oliver
(86) International application number: PCT/JP2011/051475
(87) International publication number: WO 2011/093327

(57) **Abstract**

A battery pack includes a main circuit board 40, and a plate-shaped heat-dissipating block 42. The circuit board 40 is connected to batteries 11 of a battery unit 10. The block 42 is thermally connected to a heat-generating component 41. An exterior case 30 includes two opposed surface plates 33 and side walls that close peripheral parts of the plate 33, and has a box shape the width of which is larger than the thickness. The block 42 is spaced away from the unit 10 in the case 30, and does not overlap the unit 10. The block 42 is arranged in parallel to the plate 33 in the case 30. A surface of the block 42 opposed to the plate 33 is thermally connected to the plate 33. Heat from the component 41 can be conducted to the block 42. The heat can be dissipated from the plate 33.

## Description

### Technical Field

The present invention relates to a battery pack that includes a battery block including a plurality of rechargeable base batteries accommodated in a battery holder, a heat-generating component connected to the batteries of this battery block, and an exterior case accommodating the battery block and the heat-generating component, and in particular to a battery pack that can efficiently dissipate heat from the heat-generating component.

### Background Art

A battery pack that includes a number of base batteries are connected to each other in series can increase the output voltage. Also, a battery pack that includes a number of base batteries are connected to each other in parallel can increase the output current. These battery packs have heat-generating components including transistors such as FET, and diodes. For this reason, it is important for these battery packs to efficiently dissipate the heat from the heat-generating components. That is because an abnormal temperature rise of heat-generating component may cause a failure of an element in the battery pack. Also, an abnormal temperature rise of heat-generating component may compromise proper operation of an element in the battery pack.

A battery pack has been developed which includes a metal chassis arranged in an exterior case, and heat-generating components attached onto this metal chassis in order to cool the heat-generating components (see Patent Literature 1).

### Citation List

### Patent Literature

Patent Document 1: Japanese Patent Laid-Open Publication No. JP 2007-12394 A

### Summary of Invention

### Technical Problem

As shown in Figs. 14 and 15, the battery pack disclosed in Patent Literature 1 includes an inner case 93 formed of plastic as an inner pack portion 94, and an outer case 95 formed of plastic. The inner case 93 accommodates rechargeable batteries 91 and a circuit board 92. Metal chassis portions 96 cover the inner pack portion 94 from the outside. The heat-generating components are attached onto the metal chassis portions96. The outer case 95 accommodates the inner case 93, which is reinforced with the metal chassis portions 96. Since the inner case 93 of plastic is arranged inside the metal chassis 96, the rechargeable batteries 91 are electrically and thermally insulated by the inner case 93. In addition, the exterior side of the metal chassis 96 is covered by the outer case 95 of plastic, the exterior side of the metal chassis 96 is thermally insulated by the outer case 95.

In the thus-constructed battery pack, since the heat-generating components are directly attached onto the metal chassis, there is a disadvantage that time and effort are required to assemble the inner case. The reason is that, after the rechargeable batteries are accommodated in the inner pack, the heat-generating components such as diode and FET connected to leads are attached to the metal chassis portions, which cover the inner pack portion. That is, since the heat-generating components cannot be coupled to the inner pack portion into an integral structure, the inner pack portion is necessarily connected through the leads to the heat-generating components, which are attached to the metal chassis portions. As a result, there is a disadvantage that time and effort are required for this connecting process.

The inventors have developed a battery pack circuit shown in Fig. 16 to solve this disadvantage (Japanese Patent Application No. 2008-320270). This battery pack includes a battery block 98, heat-generating components 99, a main circuit board 86, a sub circuit board 87, a heat-dissipating plate 90, and an exterior case 89. The battery block 98 includes a plurality of base batteries, which are arranged in place in battery holders 97. The heat-generating components 99 are connected to the base batteries of the battery block 98. The heat-generating components 99 are mounted on the main circuit board 86. Protection circuits for protecting the base batteries are mounted on the sub circuit board 87. The heat-dissipating plate 90 is thermally connected to the heat-generating components 99. The exterior case 89 accommodates the heat-dissipating plate 90 and the battery block 98. A metal plate 88 is arranged on an interior surface of the exterior case 89. The heat-dissipating plate 90 is thermally connected to the metal plate 88. In this battery pack, heat can be thermally conducted from the heat-generating components 99 to the heat-dissipating plate 90. Also, the heat can be thermally conducted from the heat-dissipating plate 90 to the metal plate 88. In addition, the heat can be dissipated from the exterior case 89 through the metal plate 88 to the outside so that the heat-generating components can be cooled.

In the aforementioned battery pack, in order to dissipate the heat from the heat-dissipating plate to the outside, it is necessary to arrange the metal plate with a large area on an interior surface of the exterior case. Accordingly, there is a disadvantage that this battery pack will be complicated and require time and effort when assembled. In addition, since the metal plate is heated by the heat-generating components, there is another disadvantage that it may be difficult to efficiently cool the base batteries, which are arranged to inside the metal plate. In the case where a lead plate is opposed to an interior surface of the exterior case, the lead plate is surely electrically insulated from the metal plate. As a result, a disadvantage will arise that the construction of this battery pack is further complicated. In addition, since the main circuit board 86 overlaps the sub circuit board 87, the heat-generating components mounted on these boards are arranged in proximity to each other. Accordingly, heat is likely to locally generate from this overlapping part. As a result, there is a problem that the heat may not be sufficiently dissipated if heat conducting efficiency is sufficiently high.

The present invention has been developed for solving the disadvantages. It is an object of the present invention to provide a battery pack that can efficiently cool heat-generating components, and can be simply, easily and efficiently assembled.

### Solution to Problem and Advantageous Effects of Invention

To achieve the above object, a battery pack according to a first aspect of the present invention includes a battery block 10, a main circuit board 40, a heat-generating component 41, a plate-shaped heat-dissipating block 42, and an exterior case 30. The battery block 10 includes a plurality of base batteries 11, and a battery holder 12 having battery accommodation portions 13. Each of the battery accommodation portions 13 accommodates corresponding one of the plurality of base batteries 11. The main circuit board 40 is connected to the base batteries 11 of the battery block 10. The heat-generating component 41 is connected to the main circuit board 40. The plate-shaped heat-dissipating block 42 is thermally connected to the heat-generating component 41. The exterior case 30 accommodates the heat-dissipating block 42 and the battery block 10. The exterior case 30 includes two opposed surface plates and side walls, and has a box shape. The side walls close peripheral parts of the surface plate 33. The width of the box shape is larger than the thickness of the box shape. The heat-dissipating block 42 is spaced away from the battery block 10 in the exterior case 30 so that the heat-dissipating block 42 does not overlap the battery block 10. The heat-dissipating block 42 is arranged in parallel to the surface plate 33 in the exterior case 30. An opposed surface of the heat-dissipating block 42 opposed to the surface plate 33 is thermally connected to the surface plate 33. Heat generated by the heat-generating component 41 can be conducted to the heat-dissipating block 42 so that the heat can be dissipated from the surface plate 33. According to this construction, the heat-dissipating block can be directly thermally connected to the surface plate of the exterior case. As a result, the exterior case itself can be used for heat dissipation. Therefore, there is an advantage that the heat-dissipating mechanism can be simplified.

In a battery pack according to a second aspect of the present invention, the heat-dissipating block 42 can be arranged on the longitudinal end side of a plurality of the battery blocks 10.

In a battery pack according to a third aspect of the present invention, the heat-dissipating block 42 can be a metal block having a thickness of not less than 5 mm. A block recessed portion 44 can be formed in the surface of the heat-dissipating block 42. The heat-generating component 41 can be arranged in and thermally connected to this block recessed portion 44. According to this construction, the heat-dissipating block is thick so that thermal capacity can be increased, and the heat-generating component is enclosed by the block recessed portion. As a result, heat can be efficiently dissipated from the heat-generating component through three enclosing surfaces.

In a battery pack according to a fourth aspect of the present invention, the main circuit board 40 can be orientated opposed to the recessed portion surface side of the heat-dissipating block 42 where the block recessed portion 44 is formed. The main circuit board 40 can be orientated so that the heat-generating component 41 mounted surface of the main circuit board 40 is opposed to the recessed portion surface side of the heat-dissipating block 42. The heat-generating component 41 is mounted on this heat-generating component 41 mounted surface. According to this construction, the heat-generating component mounted to the main circuit board is arranged in and can be thermally connected to the block recessed portion of the heat-dissipating block.

In a battery pack according to a fourth aspect of the present invention, the block recessed portion 44 of the heat-dissipating block 42 can be filled with thermally conductive paste 45. According to this construction, since the block recessed portion is filled with the thermally conductive paste so that an air layer can be eliminated between the heat-generating component and the block recessed portion. As a result, a thermally insulating layer can be eliminated. Therefore, the heat-generating component can be thermally connected to the block recessed portion.

In a battery pack according to a fifth aspect of the present invention, the heat-generating component 41 can include a diode that is serially connected to the base battery 11. This diode can be arranged in the block recessed portion 44 of the heat-dissipating block 42. According to this construction, since a high-heat-generating diode is arranged in the block recessed portion of the heat-dissipating block, the heat can be effectively dissipated.

In a battery pack according to a sixth aspect of the present invention, a transistor can be provided as the heat-generating component 41, and be mounted to the main circuit board 40. The main circuit board 40 can be orientated so that the transistor-mounted surface of the main circuit board 40 is opposed to the block recessed portion 44 surface of the heat-dissipating block 42. The transistor can be mounted on the transistor-mounted surface. The transistor can be arranged between the main circuit board 40 and the heat-dissipating block 42. The part between the main circuit board 40 and the heat-dissipating block 42 can be filled with thermally conductive paste 45 so that the transistor can be thermally connected to the heat-dissipating block 42 and the main circuit board 40.

In a battery pack according to a seventh aspect of the present invention, the surface plate 33 of the exterior case 30 can have a heat-dissipating block contact recessed portion 47 that is arranged on the surface side of the surface plate 33 in a thermal connection area. The interior surface of the surface plate 33 in the thermal connection area is thermally connected to the heat-dissipating block 42. A plurality of block heat-dissipating fins 48 can be arranged in the heat-dissipating block contact recessed portion 47. The protruding end surfaces of the block heat-dissipating fins 48 can be arranged coplanar with or inside the non-recessed portion surface that is arranged around the periphery of the heat-dissipating block contact recessed portion 47. According to this construction, the surface area can be increased by the block heat-dissipating fins, which protrude outward of the exterior side of the thermal connection area, so that the heat dissipation can be improved. In addition, since the height of the block heat-dissipating fins is the same as or lower than parts around the periphery of the heat-dissipating block contact recessed portion, it is possible to avoid that the block heat-dissipating fins protrude from the exterior case surface. Therefore, there is an advantage that the exterior case can be small.

In a battery pack according to an eighth aspect of the present invention, the battery block 10 can include lead plates 20 that are arranged at positions opposed to the interior surface of the surface plate 33 of the exterior case 30, and is electrically connected to end terminals of the base batteries 11. The lead plate 20 is thermally connected to the interior surface of the surface plate 33 so that heat is thermally conducted from the base batteries 11 through the lead plates 20 to the surface plate 33. According to this construction, since the lead plate and the surface plate of the exterior case 30 can serve as heat-dissipating member, another heat-dissipating member such as heat sink can be smaller or be eliminated.

In a battery pack according to a ninth aspect of the present invention, the surface plate 33 can have a lead protruding portion 24 that is arranged in a lead heat-dissipating area. The interior surface of the surface plate 33 in the lead heat-dissipating area can be thermally connected to the lead plates 20. Heat-dissipating fins 35 can be arranged on the surface side of the surface plate 33 in the exterior side of the lead protruding portion 24. The protruding end surfaces of the heat-dissipating fins 35 can be arranged coplanar with or inside the surface of the exterior part corresponding to the non-protruding portion surface that is arranged around the periphery of the lead protruding portion 24. According to this construction, the surface area can be increased by the lead heat-dissipating fins, which protrude outward of the exterior side of the lead heat-dissipating area, so that the heat dissipation can be improved. In addition, since the height of the lead heat-dissipating fins is the same as or lower than parts around the periphery of the lead protruding portion, it is possible to avoid that the lead heat-dissipating fins protrude from the exterior case surface. Therefore, there is an advantage that the exterior case can be small.

In a battery pack according to a tenth aspect of the present invention, the battery holder 12 can include a peripheral-wall-shaped lead guiding portion 22 for positioning the lead plate 20 in an attachment position. The lead guiding portion 22 partially overlaps an opening plane of at least one of the plurality of the battery accommodation portions 13. According to this construction, since the lead guiding portion for positioning the lead plate can serve as a temporarily holding portion for temporarily holding the base batteries to the battery holder, the battery holder can be simplified.

In a battery pack according to an eleventh aspect of the present invention, the battery holder 12 can further include a temporarily holding portion 14 that partially overlaps an opening plane of another of the plurality of the battery accommodation portions 13 that is located inside the peripheral wall of the lead guiding portion 22 and is not partially overlapped by the lead guiding portion 22, The lead plate 20 can have a temporarily holding opening 23 that is formed at a position corresponding to the temporarily holding portion 14 and in a size capable of receiving the temporarily holding portion 14. According to this construction, when the temporarily holding portion is inserted in the temporarily holding opening, it is possible to avoid that the temporarily holding portion interferes with the lead plate. Accordingly, the lead plate can be brought into tight contact with the base battery. In addition, the lead plate can be positioned by using the temporarily holding portion. Therefore, there is an advantage that it is possible to improve workability in battery pack assembling process and positioning accuracy of lead plate.

In a battery pack according to a twelfth aspect of the present invention, a plurality of lead contact protruding portions 24 can protrude toward the battery block 10 from a surface of the surface plate 33 opposed to the battery block 10. The lead contact protruding portion 24 has a height and shape which can be fitted into the peripheral wall of the lead guiding portion 22, and has a temporarily holding insertion opening 26 that is opened at a position opposed to the temporarily holding portion 14. According to this construction, when fitted into the lead guiding portion, the lead contact protruding portion is positioned in place. In addition, when arranged in the peripheral wall of the lead guiding portion, the lead plate is brought into tight contact with the lead contact protruding portion. As a result, heat can be thermally conducted from the base battery to the surface plate through the lead plate. Therefore, it is possible to efficiently dissipate the heat from the surface plate. Since the lead plate and the exterior case can serve as thermally conductive member, it is possible to improve the heat dissipation performance without heat sink or the like that serves only as thermally conductive member. Therefore, the pack can be small, simple, and low cost.

In a battery pack according to a thirteenth aspect of the present invention, the block heat-dissipating fins 48 can be arranged on one of the two opposed surface plates 33. The lead heat-dissipating fins 35 can be arranged on the other one of the two opposed surface plates 33. According to this construction, the front side and the back side of the exterior case can separately serve as heat-dissipating areas for dissipating heat from the battery block and the heat-dissipating block, respectively. As a result, it is possible to prevent that heat from the battery block and heat from the heat-dissipating block are conducted to the same part. Thus, the both sides of the exterior case can be efficiently used. Therefore, it is possible to effective dissipate the heat.

In a battery pack according to a fourteenth aspect of the present invention, a plurality of battery blocks can be provided as the battery block 10. Each of the battery blocks 10 includes a sub circuit board 17 that is connected to the base batteries 11 in the corresponding one of the battery blocks 10. The sub circuit board 17 can be located between the battery blocks 10. The main circuit board 40 can be arranged on the end surface side of the battery blocks 10 and be orientated intersecting with the sub circuit boards 17. According to this construction, since the main and sub circuit boards with heat-generating components are spaced away from each other and do not overlap each other, it is possible to prevent that heat is locally generated. Therefore, there is an advantage that heat can be efficiently dissipated.

In a battery pack according to a fifteenth aspect of the present invention, the exterior case 30 can include a first case portion 31 and a second case 32. Each of the first and second case portions includes the surface plate 33 with a rectangular shape, and a side wall portion 4b that is arranged along in the periphery of the surface plate 33. The first case portion 31 and the second case portion 32 are coupled to each other so that the exterior case 30 accommodates the battery block 10, the main circuit board 40, and the heat-generating component 41.

In a battery pack according to a sixteenth aspect of the present invention, the exterior case 30 can be formed of electrically-insulating resin. According to this construction, the exterior case can be electrically insulative, lightweight and inexpensive. In addition, although the exterior case is formed of resin, which has low thermal conductivity as compared with metal plates, in the case where the exterior case is directly thermally connected to the heat-dissipating block so that a thermally insulating layer such as air layer is eliminated, it is possible to dissipate the heat.
A battery pack according to another aspect of the present invention includes a plurality of battery blocks 10, a main circuit board 40, and an exterior case 30. Each of the plurality of battery blocks 10 includes a plurality of base batteries 11, and a battery holder 12. The battery holder has battery accommodation portions 13. Each of battery accommodation portions 13 accommodates corresponding one of the plurality of base batteries 11. The main circuit board 40 is connected to the base batteries 11 of the battery block 10. The exterior case 30 accommodates the battery blocks 10. The exterior case 30 includes two opposed surface plates 33 and side walls, and has a box shape. The side walls close peripheral parts of the surface plates 33. Each of the battery blocks 10 includes a sub circuit board 17 that is connected to the base batteries 11 in the corresponding one of the battery blocks 10. The main circuit board 40 is arranged along the side-by-side arrangement direction of the battery blocks 10 on the end surface side of the battery blocks 10, and is orientated intersecting with the sub circuit boards 17. According to this construction, since the main and sub circuit boards do not overlap each other, the heat can be efficiently dissipated.

### Brief Description of Drawings

Fig. 1: Perspective view showing the outward appearance of a battery pack according to an embodiment as viewed from the front side.
Fig. 2: Perspective view showing the battery pack shown in Fig. 1 as viewed from the back side.
Fig. 3: Exploded perspective view showing the battery pack shown in Fig. 1.
Fig. 4: Perspective view showing the battery pack shown in Fig. 3 with a first case portion being removed.
Fig. 5: Cross-sectional view of the battery pack shown in Fig. 4 taken along the line V-V.
Fig. 6: Exploded perspective view showing accommodated members inside the battery pack shown in Fig. 3.
Fig. 7: Perspective view showing a battery block.
Fig. 8: Exploded perspective view showing the battery block shown in Fig. 7.
Fig. 9: Perspective view showing the interior surface sides of surface plates.
Fig. 10: Exploded perspective view showing a main circuit board and a heat-dissipating block.
Fig. 11: Cross-sectional perspective view of the battery pack shown in Fig. 2 taken along the line XI-XI.
Fig. 12: Transverse cross-sectional perspective view of the battery pack shown in Fig. 9 taken along the line XII-XII.
Fig. 13: Transverse cross-sectional perspective view of the battery pack shown in Fig. 2 taken along the line XIII-XIII.

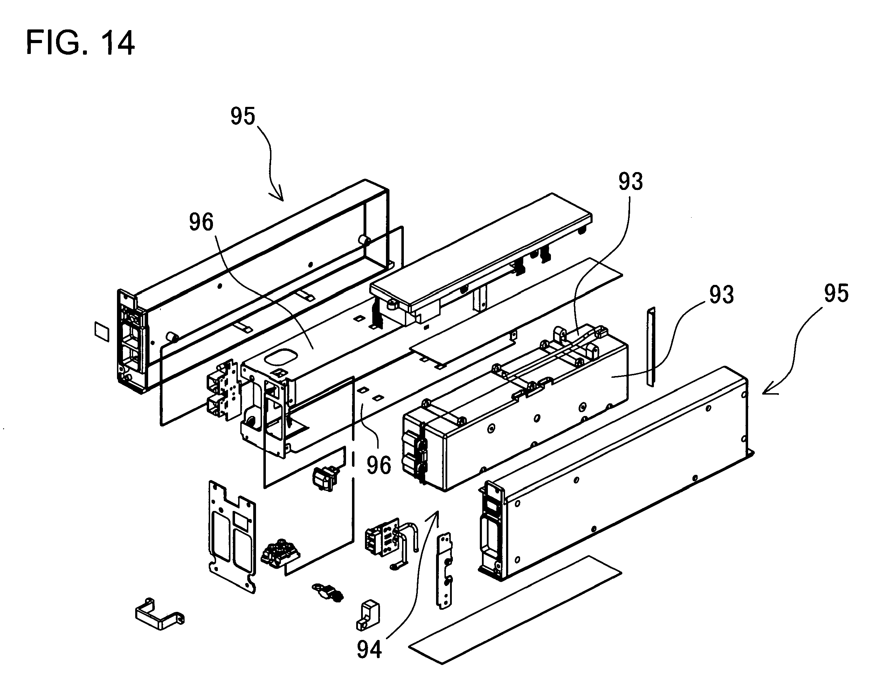

Fig. 14: Exploded perspective view showing a known battery pack.

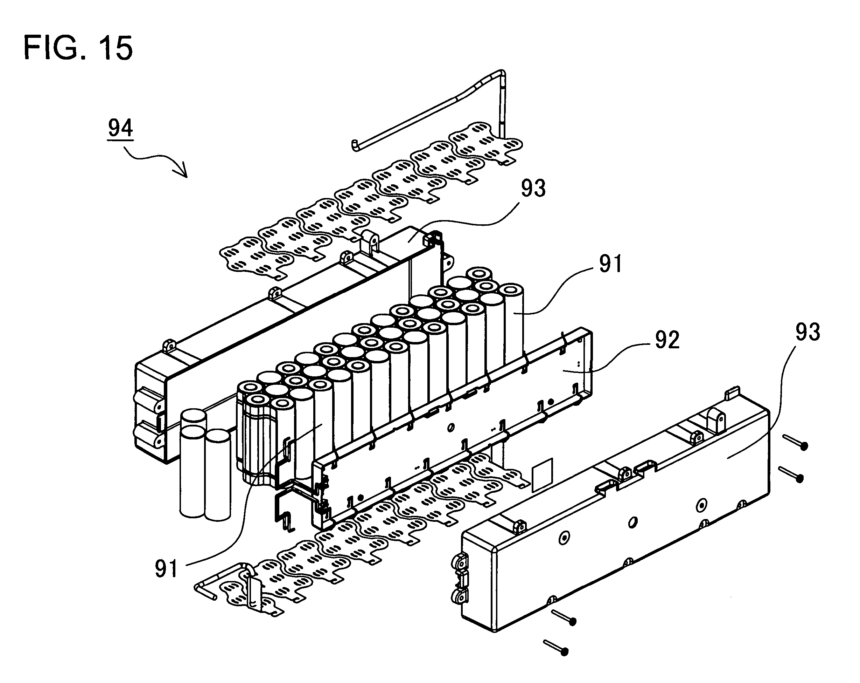

Fig. 15: Exploded perspective view showing an inner pack portion of the battery pack shown in Fig. 14.

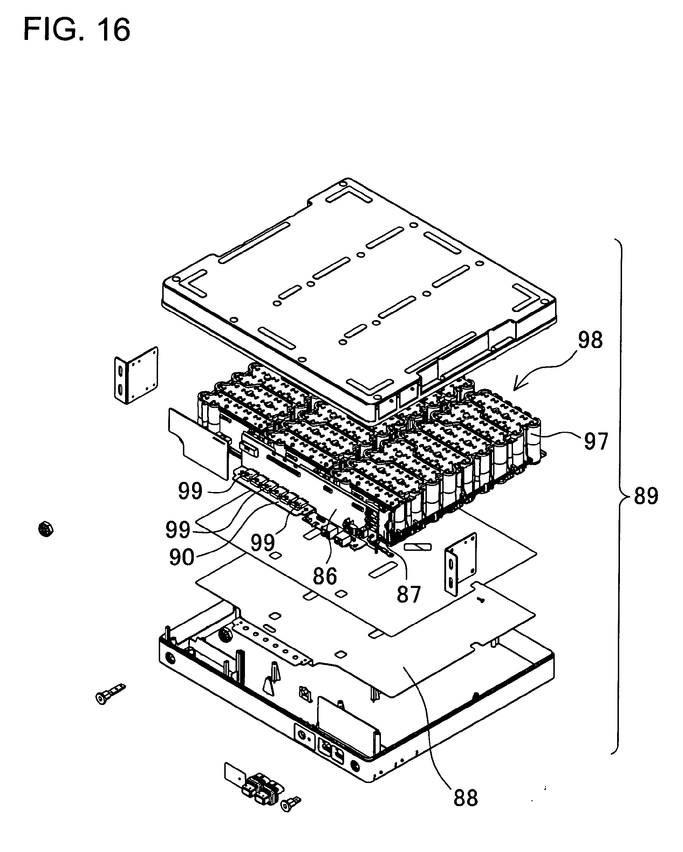

Fig. 16: Exploded perspective view showing another battery pack.

### Description of Embodiments

The following description will describe embodiments according to the present invention with reference to the drawings. It should be appreciated, however, that the embodiments described below are illustrations of a battery pack used therein to give a concrete form to technical ideas of the invention, and a battery pack of the invention is not specifically limited to description below. In this specification, reference signs corresponding to components illustrated in the embodiments are added in "Claims" and "Summary" to aid understanding of claims. However, it should be appreciated that the members shown in claims attached hereto are not specifically limited to members in the embodiments. Unless otherwise specified, any dimensions, materials, shapes and relative arrangements of the members described in the embodiments are given as an example and not as a limitation. Additionally, the sizes and the positional relationships of the members in each of drawings are occasionally shown larger exaggeratingly for ease of explanation. Members same as or similar to those of this invention are attached with the same designation and the same reference signs, and their description is omitted. In addition, a plurality of structural elements of the present invention may be configured as a single part that serves the purpose of a plurality of elements, on the other hand, a single structural element may be configured as a plurality of parts that serve the purpose of a single element. Also, the description of some of examples or embodiments may be applied to other examples, embodiments or the like.

### (FIRST EMBODIMENT)

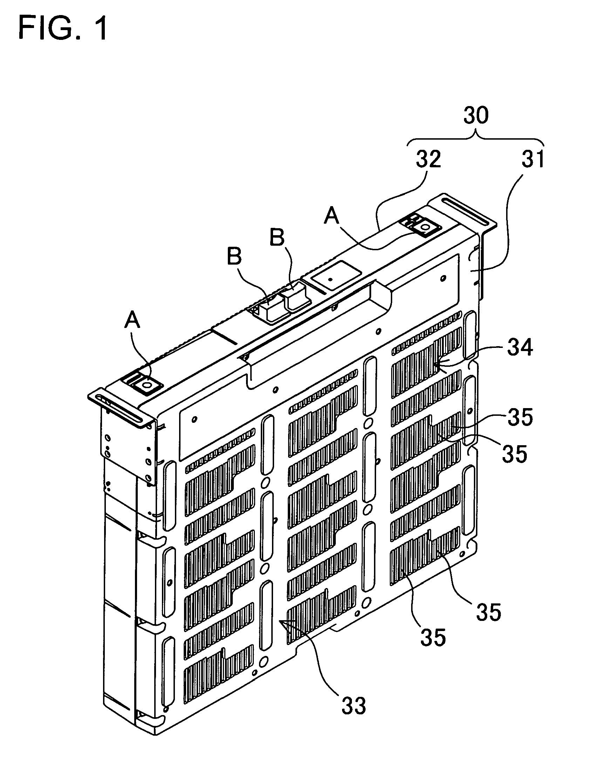

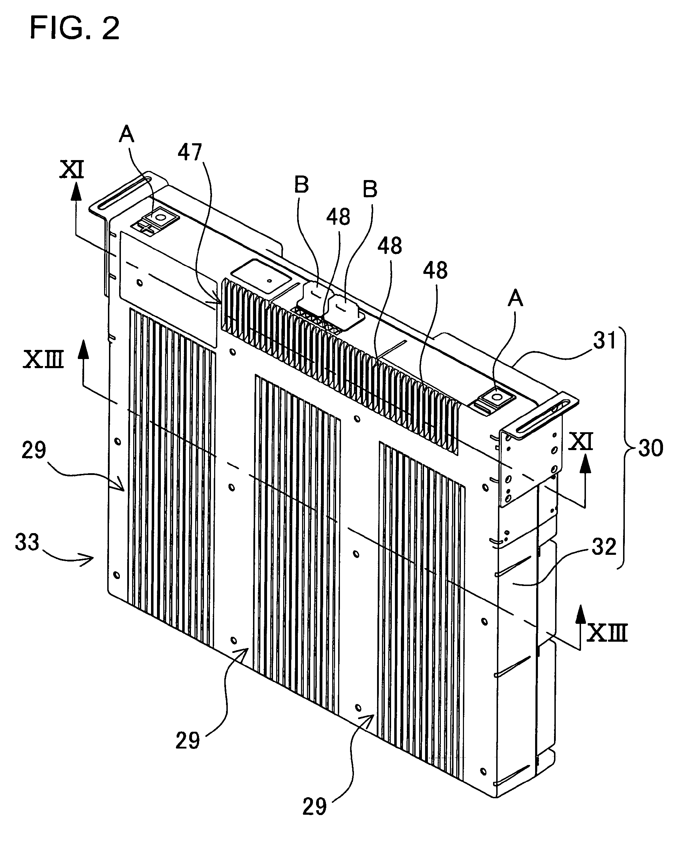

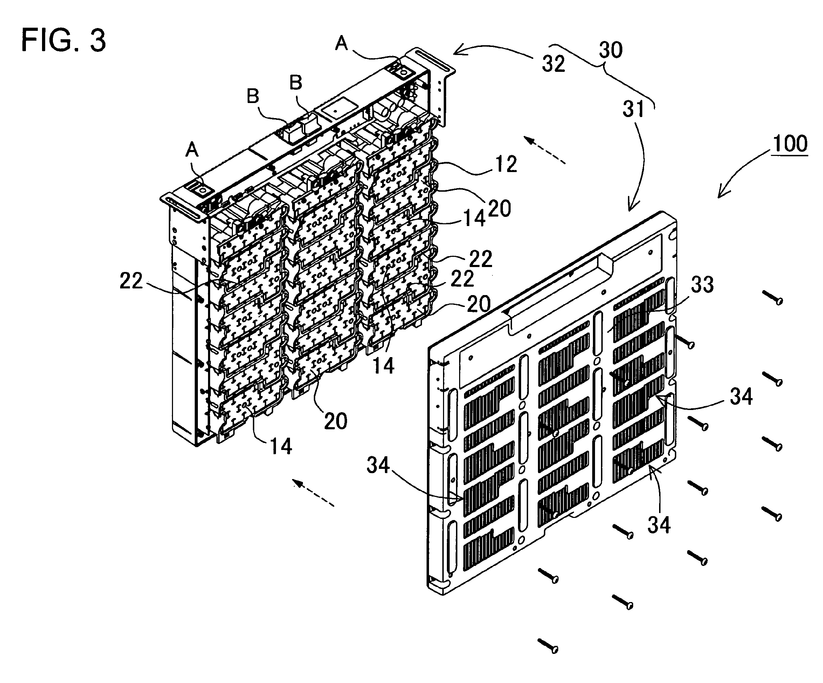

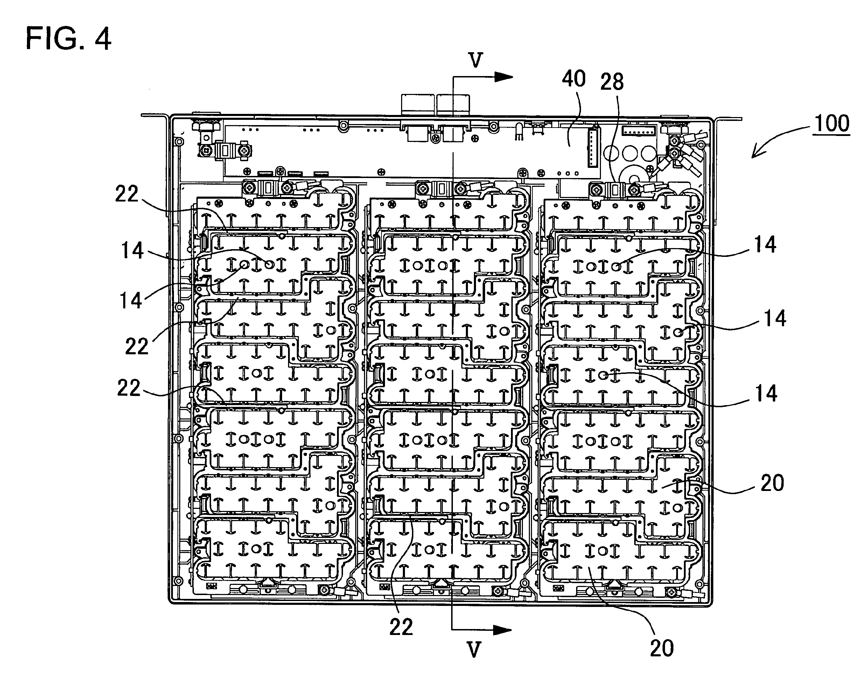

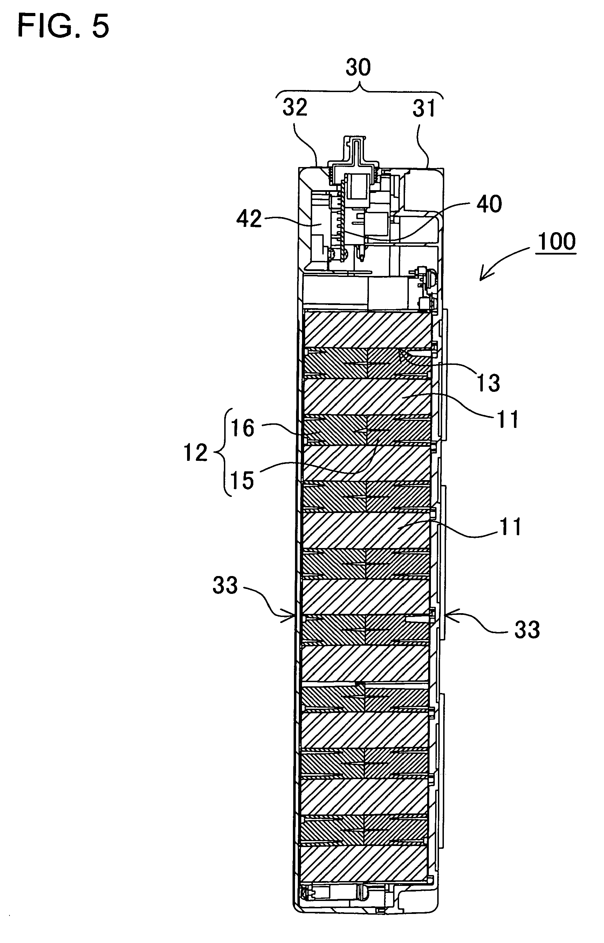

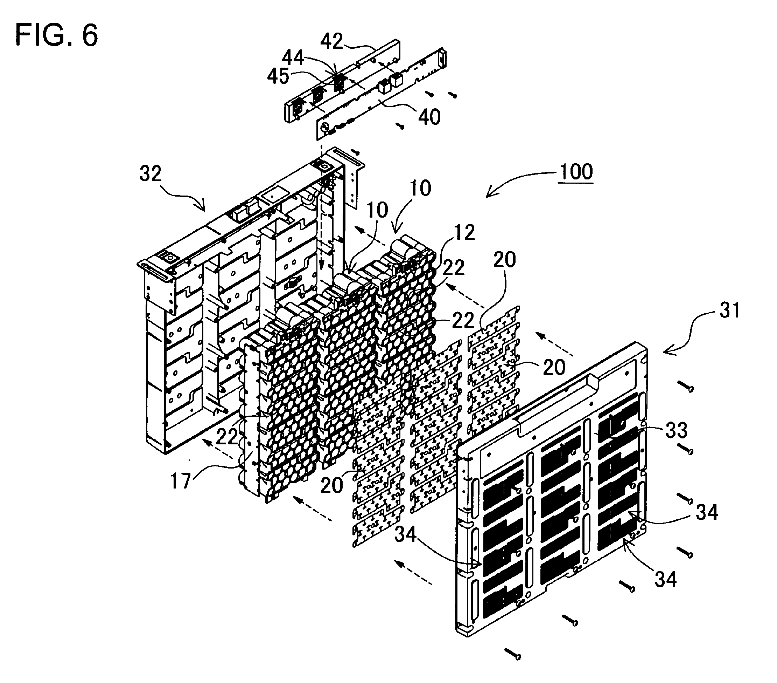

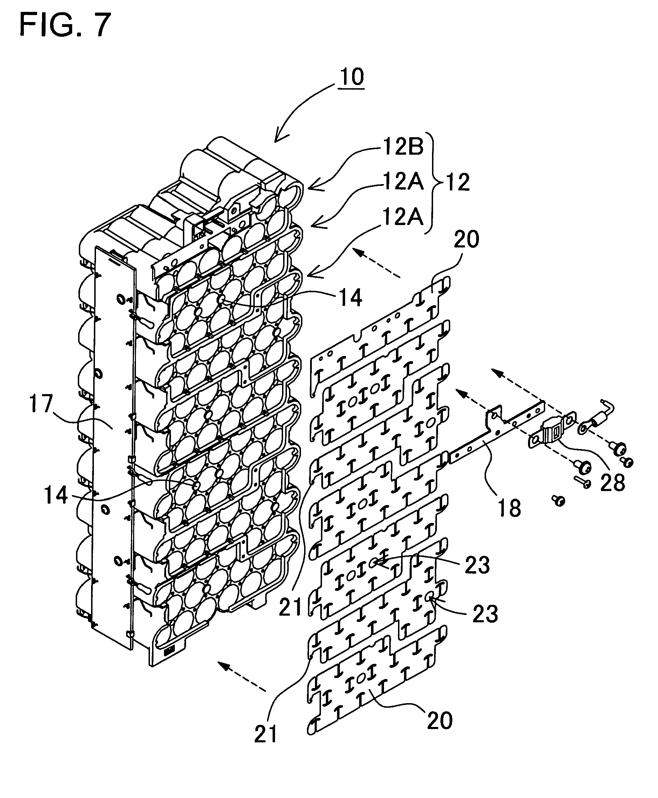

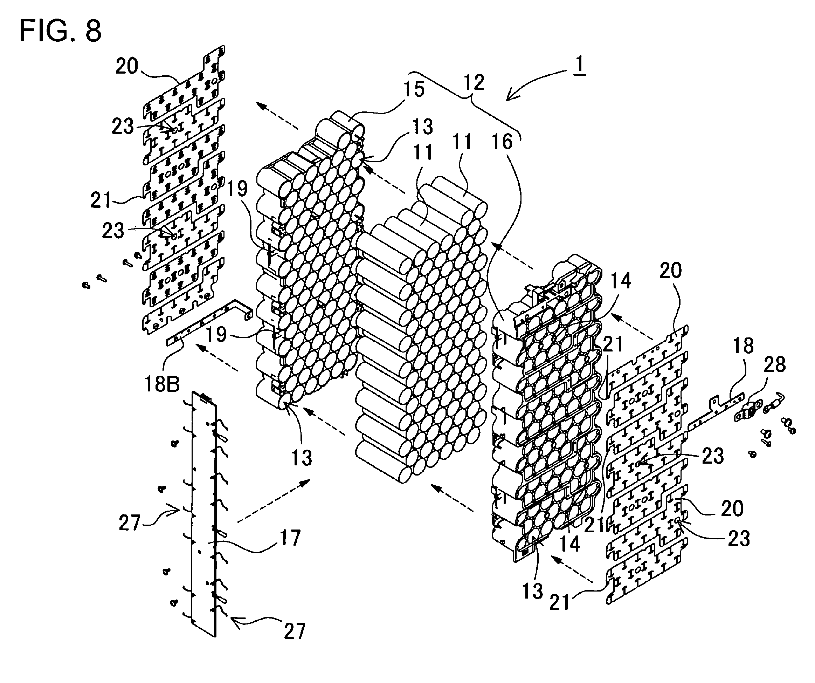

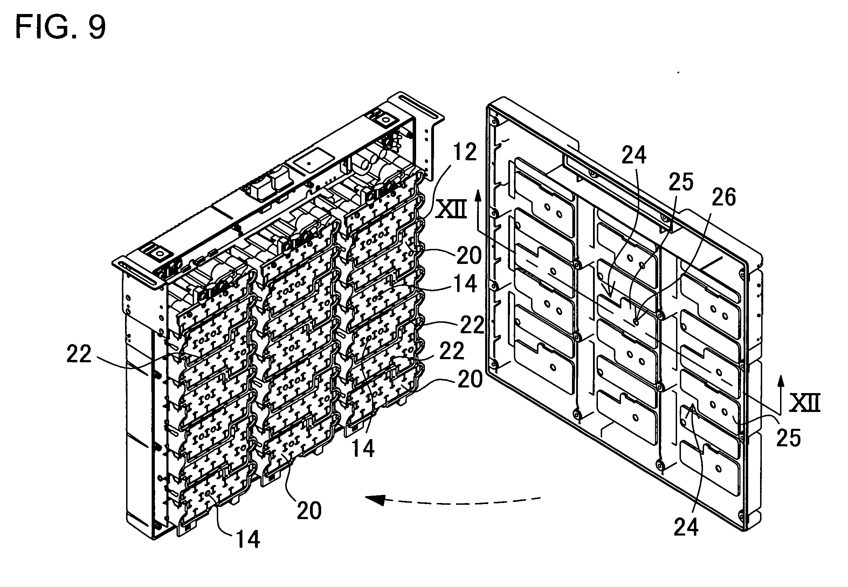

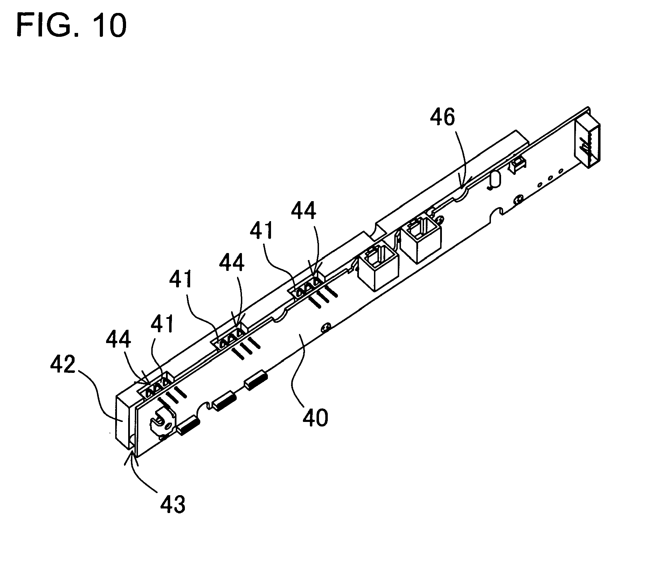

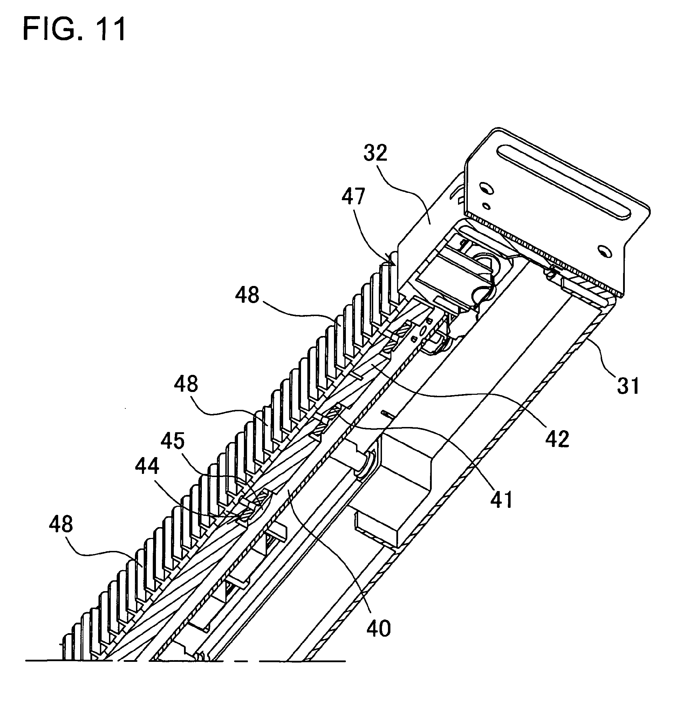

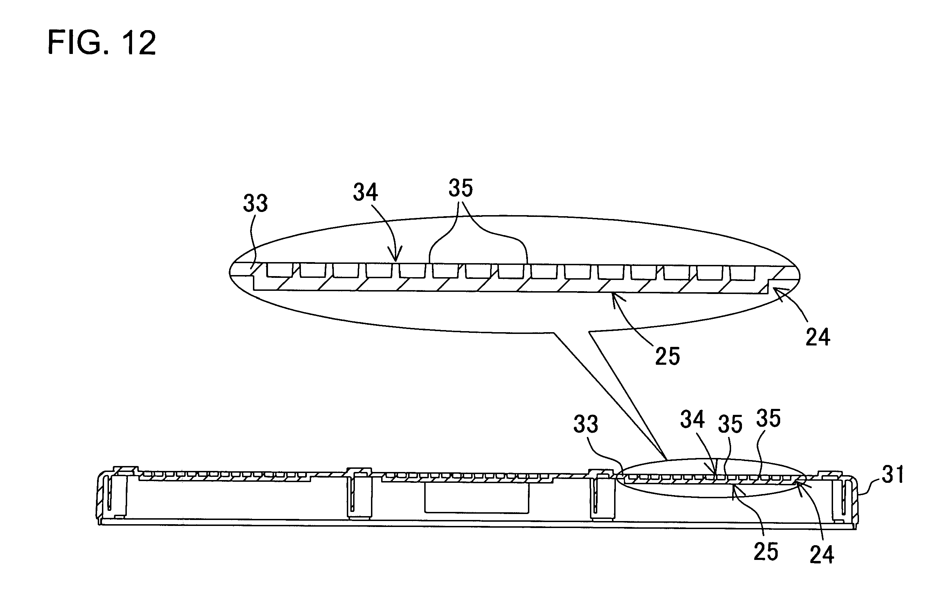

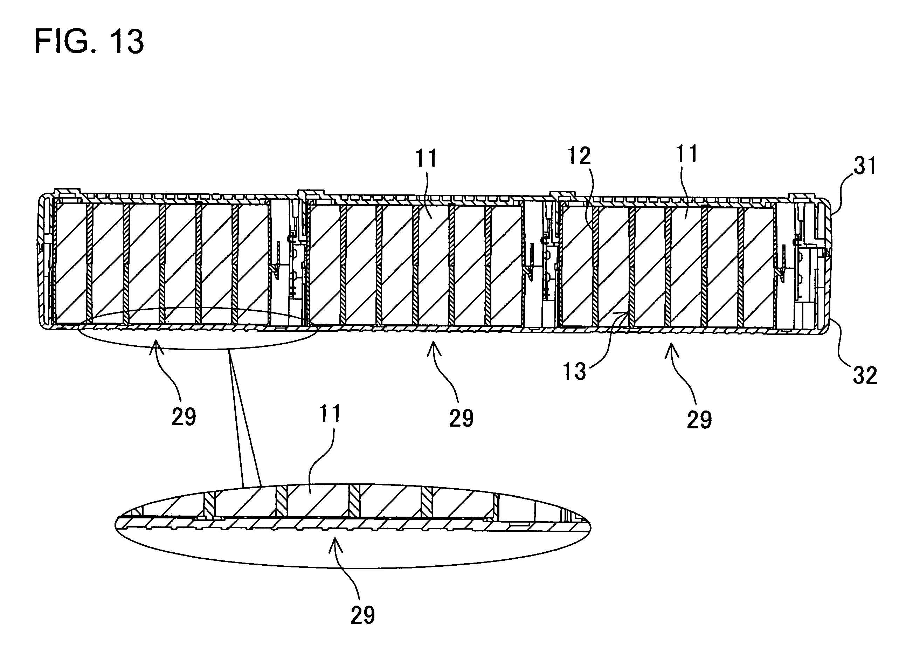

The following description will describe a battery pack 100 according to a first embodiment of the present invention with reference to Figs. 1 to 13. In this embodiment, the present invention is applied to a backup power supply device. Fig. 1 is a perspective view the outward appearance of a battery pack 100 from the front side. Fig. 2 is a perspective view showing the battery pack 100 shown in Fig. 1 as viewed from the back side. Fig. 3 is an exploded perspective view showing the battery pack 100 shown in Fig. 1. Fig. 4 is a perspective view showing the battery pack 1oo shown in Fig. 3 with a first case portion 31 being removed. Fig. 5 is a cross-sectional view of the battery pack shown in Fig. 4 taken along the line V-V. Fig. 6 is an exploded perspective view showing accommodated members inside the battery pack 100 shown in Fig. 3. Fig. 7 is a perspective view of a battery block 10. Fig. 8 is an exploded perspective view showing the battery block 10 shown in Fig. 7. Fig. 9 is a perspective view showing the interior surface sides of surface plates 33. Fig. 10 is an exploded perspective view showing a main circuit board 40 and a heat-dissipating block 42. Fig. 11 is a cross-sectional perspective view of the battery pack shown in Fig. 2 taken along the line XI-XI. Fig. 12 is a transverse cross-sectional perspective view of the battery pack shown in Fig. 9 taken along the line XII-XII. Fig. 13 is a transverse cross-sectional perspective view of the battery pack shown in Fig. 2 taken along the line XIII-XIII.

The illustrated battery pack 100 includes the battery blocks 10, the main circuit board 40, heat-generating components 41, the heat-dissipating block 42, and an exterior case 30. Each of the battery blocks 10 includes a plurality of base batteries 11, which are arranged in place in battery holders 12. The main circuit board 40 is electrically connected to the battery block 10. The heat-generating components 41 are mounted to the main circuit board 40. The heat-dissipating block 42 is thermally connected to the heat-generating components 41. The exterior case 30 accommodates the heat-dissipating block 42 and the battery block 10.

In the exemplary battery pack shown in Fig. 3, three battery blocks 10 are arranged in parallel to each other, and accommodated in the exterior case 30. In each of the battery blocks 10, as shown in Fig. 8, the battery holders 12 hold the base batteries 11, which are cylindrical rechargeable batteries. The base batteries 11 are held in a horizontal orientation by the battery holders 12, as shown in Fig. 8. In this battery pack 100, in the case where the exterior case 30 stands in an upright orientation, the base batteries 11 are arranged side by side in the vertical direction with each of the base batteries 11 being horizontally orientated. The three battery blocks 10 are connected in parallel or in series to each other, and are connected to output terminals. The output current can be large in the case where the battery blocks 10 are connected to in parallel each other in the battery pack 100. The output voltage can be high in the case where the battery blocks 10 are connected in series to each other in the battery pack 100.

In the exemplary battery pack shown in Figs. 4, 8, or the like, the base batteries 11 are connected to each other in thirteen-serial and eight-parallel connection in one battery block 10, while three battery blocks 10 are connected in parallel to each other. As shown in Figs. 1, 2, or the like, terminals are arranged on the upper surface of the exterior case 30. The positive/negative power supply output terminals A are arranged on the right and left sides of the exterior case 30 upper surface. In addition, input/output communication terminals B are arranged in the center.

In exemplary typical installation orientation of the battery pack, one of the surface plates 33 that can be seen in Fig. 1 serves as the lower surface, while the other of the surface plates 33, which can be seen in Fig. 2, serves as the upper surface. That is, a heat-dissipating block contact recessed portion 47 faces upward. When necessary, a plurality of battery packs 100 can be arranged in the vertical direction. It is preferable that the plurality of battery packs be spaced at a suitable interval away from each other. In the case where the exterior case 30 is dimensioned and shaped to match with existing 19-inch racks, which are standardized frames in computer server industry, the battery pack can be adapted to a wide variety of applications. Accordingly, there is an advantage that the battery pack can be fastened to existing racks. In particular, the battery pack can be used as a backup power supply for servers.

### (Exterior Case 30)

As shown in Figs. 1 to 3, the exterior case 30 includes two opposed surface plates 33, and side walls that close peripheral parts of the surface plates 33. This exterior case 30 has a box shape the width of which is larger than the thickness. The exterior case 30 is preferably formed of an electrically insulating material, more preferably of resin. In this case, it is possible to inexpensively provide an electrically insulating and light exterior case. On the other hand, from the viewpoint of durability and thermal conductivity, the exterior case can be formed of metal such as aluminum. In this case, the battery pack can be used for applications that do not require for the exterior case to be electrically insulative. Alternatively, the surfaces of the metal exterior case can be covered with an electrically insulating member such as laminate film and vinyl case. However, even if the exterior case is formed of resin, which has low thermal conductivity as compared with metal plates, according to the construction in which the exterior case is directly thermally connected to the heat-dissipating block 42 as discussed later, a thermally insulating layer such as air layer can be eliminated. Therefore, the battery pack can achieve sufficient heat-dissipating performance.

As shown in Figs. 2 and 13, which are the perspective view and the transverse cross-sectional view taken along the line XIII-XIII in Fig. 2, a plurality of slit-shaped recessed portions 29 are formed in parallel to each other in a surface of the exterior case 30. The slit-shaped recessed portions 29 are partially recessed from the surface of the exterior case 30. The ridges between the slit-shaped recessed portions 29 do not protrude from the surface of the exterior case 30. That is, the top surfaces of walls between slits are substantially coplanar with the surface of the exterior case 30. According to this construction, it is possible to prevent that the portion protrudes from the surface of the exterior case 30. As a result, the battery pack can be easily installed or carried.

The recessed portions 29 are arranged in the location corresponding to the battery blocks 10, which are accommodated in the exterior case. In the exemplary battery pack shown in Fig. 2, three groups of recessed portions 29 corresponding to three battery blocks 10 are formed in parallel to each other. Since the recessed portions 29 are formed, the surface area of the exterior case 30 can be increased. As a result, it is possible to improve the heat-dissipating effect. In particular, since a plurality of the slit-shaped recessed portion 29 are arranged in parallel to each other, air is likely to flow in the slit-extending direction. As a result, there is an advantage that the heat cooling effect can be improved. In addition, in the case where the exterior case 30 is held in the vertical orientation as shown in Fig. 2, the natural convection by heat dissipation from the exterior case 30 surface will facilitate moving air on the surface of the exterior case along the slit-shaped recessed portions. Therefore, it can be expected that this moving air improves the heat-dissipating performance.

### (Battery Block 10)

As shown in Fig. 3 and Fig. 4, a plurality of battery blocks 10 are accommodated in the exterior case 30. Each of the battery blocks 10 includes the battery holders 12, which accommodate a plurality of base batteries 11 as shown in Fig. 8. In each of the battery blocks 10, a plurality of base batteries 11 are arranged side by side in parallel to each other so that the battery block has a substantially block shape except cylindrical side surfaces of the cylindrical base batteries 11. Each of battery accommodation portions 13 of the battery holder 12 accommodates one base battery 11. Accordingly, the battery holder 12 has a thickness that is reduced (minimized) to a small degree that is obtained by adding the thickness of members including lead plates 20 to the length of the cylindrical base battery 11.

### (Base Battery 11)

In the illustrated battery block 10, the battery accommodation portions 13 of the battery holder 12 accommodate the base batteries 11, which are lithium ion batteries. In the battery pack that includes lithium ion batteries as the base batteries, its output can be high relative to its volume and weight. However, instead of lithium ion batteries, lithium-polymer batteries or nickel metal hydride batteries can also be used as the base batteries. The base batteries in the present invention are not limited to lithium ion batteries. Any types of rechargeable batteries may be used as the base batteries in the present invention. In the illustrated battery pack, although cylindrical batteries are used the base batteries, the base batteries can be rectangular batteries. Temperature sensors for detecting temperature are arranged on the base batteries 11. The temperature sensors can be arranged on all of the base batteries. Alternatively, the temperature sensors may detect temperatures of only representative base batteries that are arranged in particular locations. The output sides of the temperature sensors are connected to and monitored by a sub circuit board 17.

### (Battery Holder 12)

The battery holder 12 is formed of an electrically insulating material, preferably of resin. In this embodiment, the base batteries 11 are cylindrical rechargeable batteries. Correspondingly, a plurality of battery accommodation portions 13 are formed in the battery holder 12 and have cylindrical hollow interior space so that the cylindrical base battery 11 can be accommodated in the cylindrical battery accommodation portions 13. The battery accommodation portion 13 entirely surrounds the cylindrical peripheral surface of the cylindrical base batteries 11. In this embodiment, the battery accommodation portions 13 are formed so that the center axes of the cylindrical base batteries in upper and lower rows are deviated (offset) from each other when the cylindrical base batteries 1 are arranged side by side.

### (Temporarily Holding Portion 14)

Temporarily holding portions 14 are provided for the battery accommodation portions 13. The temporarily holding portions 14 temporarily hold the cylindrical base batteries 11 accommodated in the battery accommodation portions 13, and prevent the base batteries 11 from dropping off. The temporarily holding portions 14 are protrusions that partially overlap from the end surfaces of the hollow battery accommodation portions 13. The end surfaces of the cylindrical base batteries 11 accommodated in the battery accommodation portions 13 come in contact with the protrusions. According to this construction, when accommodated in the battery accommodation portions 13, the cylindrical base batteries 11 can be temporarily held. As a result, it is possible to fasten the lead plates 20 to the temporarily held base batteries 11 by welding, or the like. It is preferable that the temporarily holding portions 14 be arranged on the both sides of the battery accommodation portion 13, which is opened on the right and left sides of the battery holder 12. According to this construction, when the base battery 11 is inserted into the battery accommodation portion 13, this base battery 11 can be held and be prevented from easily dropping off even if the battery block 10 is tilted either rightward or leftward.

The battery holder 12 shown in Fig. 8 includes first and second holder cases 15 and 16 that correspond to half parts of the battery holder 12, which are located on the right and left sides in Fig. 8. The first and second holder cases 15 and 16 can hold the cylindrical base batteries 11 from the both sides. The first and second holder cases 15 and 16 are separated members formed of resin such as plastic. After the cylindrical base battery 11 is inserted into the first and second holder cases 15 and 16, the first and second holder cases 15 and 16 are coupled to each other. In addition, the first and second holder cases 15 and 16 include engagement structures (not shown) that are arranged on opposed surfaces, which come into contact with each other, so that the first and second holder cases 15 and 16 can be coupled to each other in place. When the first and second holder cases 15 and 16 are coupled to each other, the cylindrical base batteries 11 have been inserted into the battery accommodation portions 13 of the battery holder 12 so that the cylindrical base batteries 11 can be held in the predetermined positions. Simultaneously, the accommodated cylindrical base batteries 11 serve as cores so that the first and second holder cases 15 and 16 can be coupled to each other in place.

In the battery block 10, the battery holder 12 holds the base batteries 11 in a parallel orientation, specifically, in a horizontal orientation in Figs. 3, 4 and 6, with the end surfaces of the base batteries being aligned coplanar with each other. In the battery block 10, the lead plates 20 are connected to the both end terminals of the base batteries 11 held in the battery holder 12 by spot welding, or the like. Thus, the base batteries 11 are connected in parallel and in serial to each other. The lead plates 20 are arranged on the openings of the cylindrical battery accommodation portions 13, which are formed in the battery holder 12, and are connected to the end terminals of the cylindrical base batteries 11, which are arranged in the battery accommodation portions 13. The battery holder 12 includes lead guiding portions 22 that can hold in the lead plates 20 in predetermined positions. The lead plates 20 are arranged in the lead guiding portions 22, and are connected to the end terminals of the base batteries 11, which are inserted into the battery accommodation portions 13 of the battery holder 12. In the battery block 10, the shape of the lead plate 20 and the orientation of the base batteries 11 held in the battery holder 12 are adjusted so that the number of the base batteries 11 connected to each other in parallel and in series can be changed to an optimum state. The output voltage can be adjusted by the number of the base batteries 11 serially connected to each other. The output current can be adjusted by the number of the base batteries 211 connected in parallel to each other. The lead plate 20 includes a connection terminal 21 that is connected to the sub circuit board 17. As discussed later, metal wire lines 27 are connected to the both sides of the sub circuit board 17. The metal wire lines 27 are connected to the connection terminals 21 by soldering, or the like. According to this construction, the sub circuit board 17 is provided with, and measures the potentials of batteries 11 that are connected in parallel to each other (intermediate potentials). As a result, it is possible to properly protect the batteries.

In the battery block 10, the battery holder 12 holds the base batteries 11 in a parallel orientation, specifically, in a horizontal orientation in Figs. 3, 4 and 6, with the end surfaces of the base batteries being aligned coplanar with each other. In the battery block 10, the lead plates 20 are connected to the both end terminals of the base batteries 11 held in the battery holder 12 by spot welding, or the like. Thus, the base batteries 11 are connected in parallel and in serial to each other. The lead plates 20 are arranged on the openings of the cylindrical battery accommodation portions 13, which are formed in the battery holder 12, and are connected to the end terminals of the cylindrical base batteries 11, which are arranged in the battery accommodation portions 13. The battery holder 12 includes the lead guiding portions 22 that can hold in the lead plates 20 in predetermined positions. The lead plates 20 are arranged in the lead guiding portions 22, and are connected to the end terminals of the base batteries 11, which are inserted into the battery accommodation portions 13 of the battery holder 12. In the battery block 10, the shape of the lead plate 20 and the orientation of the base batteries 11 held in the battery holder 12 are adjusted so that the number of the base batteries 11 connected to each other in parallel and in series can be changed to an optimum state. The output voltage can be adjusted by the number of the base batteries 11 serially connected to each other. The output current can be adjusted by the number of the base batteries 211 connected in parallel to each other. The lead plate 20 includes a connection terminal 21 that is connected to the sub circuit board 17. As discussed later, metal wire lines 27 are connected to the both sides of the sub circuit board 17. The metal wire lines 27 are connected to the connection terminals 21 by soldering, or the like. According to this construction, the sub circuit board 17 is provided with, and measures the potentials of base batteries 11 that are connected in parallel to each other (intermediate potentials). As a result, it is possible to properly protect the base batteries.

### (Sub Circuit Board 17)

The sub circuit board 17 is fastened to the side surface of each of the battery holders 12, and detects and monitors the battery temperature in corresponding one of the battery blocks 10. The sub circuit board 17 includes a temperature detector circuit that receives the output of the temperature sensors fastened to the base batteries 11. In addition, the sub circuit board 17 can include a current sensor that detects charging/discharging current in corresponding one of the battery blocks 10, a voltage sensor, or a charge/discharge control circuit, if necessary. In this embodiment, the sub circuit board 17 is located between the battery blocks 10. For this reason, relatively low-heat-generating elements are mounted on the sub circuit board 17, while relatively high-heat-generating elements are mounted on the main circuit board 40 discussed later. In this embodiment, the sub circuit board 17 is provided with electronic components that realize a protection circuit for controlling the charging/discharging operation on the base batteries 11.

The sub circuit board 17 is arranged on the left side of the battery holder 12 in Figs. 6 and 8. The sub circuit board 17 is connected to the positive/negative terminals of the base batteries 11 through the metal wire lines 27. The protection circuit mounted in the sub circuit board 17 detects voltages on base batteries 11 so that the voltages on base batteries 11 are adjusted in a predetermined range. As a result, it is possible to prevent that the base batteries 11 are over-charged/over-discharged.

As shown in Figs. 7, 8 or the like, one end of the power supply output of the battery block 10 is connected to a lead in the upper part of the battery block 10 through a lead plate 18 and a fuse 28, while the other end is connected to a lead (not shown) in the lower part of the battery block 10 through a lead plate 18B. The power supply output of the battery block is supplied to the main circuit board 40. The battery blocks 10 are electrically connected in parallel to each other. Thus, the power supply output of the battery pack is supplied.

In this embodiment, the power supply outputs of the battery blocks 10 are provided through the diodes as discussed above, and are then connected in parallel to each other. Thus, the power supply output of the battery pack is supplied through the output terminals A. Needless to say, however, the outputs of the battery blocks 10 can be serially connected to each other for supplying the output of the battery pack.

In addition, guide ribs 19 are formed of plastic integrally with the first and second holder cases 15 and 16, and hold the sub circuit board 17. The guide ribs 19 protrude alternately from the right and left side surfaces of the battery holder 12. A screw hole for fastening the sub circuit board 17 is opened on the end surface of the guide rib 19. The sub circuit board 17 can be fastened by screwing a fastening screw into the screw hole.

### (Lead Plate 20)

After the cylindrical base batteries 11 are inserted into the battery accommodation portions 13 of the battery holder 12, the lead plates 20 are fastened onto the end terminals, which are exposed on the end surfaces of the base batteries 11. The lead plates 20 serve as members that connect the base batteries 11 in parallel and/or in series to each other with the base batteries 11 being accommodated in the battery holder 12. A thin metal plate is used as the lead plate 20. In the exemplary battery block shown in Fig 8, one battery holder 12 holds sixteen base batteries 11 to be connected to the lead plate 20. In the one battery holder 12, eight base batteries 11 that are connected in parallel to each other compose one parallel-connection group of base batteries 11. Two parallel-connection groups of base batteries 11 are connected in series to each other. Thus, a battery holder 12A as the battery holder 12 holds two parallel-connection groups (each group is composed of eight base batteries so that totally sixteen base batteries are held in the battery holder 12A). In addition, a battery holder 12B (located in the top end in Fig. 7) serves as the battery holder 12, and holds one parallel-connection group of base batteries (totally eight base batteries are held in the battery holder 12B). Twelve battery holders 12A and one battery holder 12B are connected in series to each other so that thirteen base batteries 11 are connected in series to each other. In other words, the base batteries 11 are connected to each other in thirteen-serial and eight-parallel connection in one battery block 10.

### (Lead Guiding Portion 22)

The lead guiding portion 22 is arranged along the side surfaces of the battery holder 12, and guides the lead plate 20 to an installation position. The lead guiding portion 22 is formed in a peripheral-wall shape substantially matching with the exterior shape of the lead plate 20. The lead plates 20 can be easily positioned in a process for fastening the lead plates 20 to the base batteries 11 by placing the lead plates 20 inside the peripheral-wall shapes of the lead guiding portions 22. It is preferable that the lead guiding portion 22 also serve as the temporarily holding portion that prevents the base batteries 11 from dropping off. That is, in the case where the lead guiding portions 22 partially protrude toward or overlap the opening surfaces of the battery accommodation portions 13, the partially protruding parts of the lead guiding portions 22 come in contact with the end surfaces of the base batteries 11, which are inserted into the battery accommodation portions 13, so that the base batteries 11 can be prevented from dropping off. In this case, a part that protrudes outward of the battery holder 12 can be small. As a result, the battery holder 12 can be simplified. The lead guiding portion 22 can be an elongated member that has a square shape as viewed in section, for example.

However, all of the temporarily holding portions are not necessarily required to be provided by the lead guiding portions 22. Separately provided temporarily holding portions 14 can be additionally arranged in the battery accommodation portions 13 in which the lead guiding portions are not provided. In this case, one temporarily holding portion 14 can be arranged straddling battery accommodation portions 13 that are located adjacent to each other and are not provided with the lead guiding portions. The one temporarily holding portion 14 overlaps or protrudes toward battery accommodation portions 13 that are located adjacent to each other. Thus, one temporarily holding portion 14 can serve as a temporarily holding member that temporarily holds two battery accommodation portions 13. The one temporarily holding portion 14 can have a disk shape, and be arranged in proximity to the boundary between battery accommodation portions 13 that are located adjacent to each other. Thus, the disk-shaped temporarily holding portion 14 protrudes in the right and left battery accommodation portions 13. Therefore, it is possible to effectively prevent the base batteries 11 from dropping off.

In addition, the height of the temporarily holding portion 14 is larger than the thickness of the lead plate 20, and is preferably the same as or smaller than the height of the lead guiding portion 22. It is preferable that the lead guiding portion 22 and the temporarily holding portion(s) 14 be formed integrally with the battery holder 12 by molding. According to this construction, manufacturing processes can be simplified, and low cost. However, the sectionally rectangular lead guiding portions 22 and the disk-shaped temporarily holding portions 14 may be prepared separately from the battery holders, and be fastened to the side surfaces and the like of the battery holders by an adhesive or the like.

In addition, the temporarily holding portions 14 are arranged in areas that are enclosed by the lead guiding portions 22. That is, since the lead guiding portion 22 serves as temporarily holding portions 14 that temporarily hold base batteries accommodated in battery accommodation portions 13 that are arranged along the lead guiding portion 22, additional temporarily holding portions 14 can be arranged which temporarily hold base batteries accommodated in battery accommodation portions 13 that do not face the lead guiding portion 22, in other words, are not arranged along the lead guiding portion 22 but are arranged inside away from the lead guiding portion 22.

### (Temporarily Holding Opening 23)

In addition, the lead plates 20 have temporarily holding openings 23 that are formed at the positions corresponding to the temporarily holding portions 14 so that, when the lead plates 20 are fastened, the temporarily holding portions 14 to be located in the lead plates 20 may not interfere with the lead plates 20. According to this construction, since it is avoidable that the lead plate 20 interferes with the temporarily holding portion 14, the lead plate 20 can be brought into tight contact with the end surfaces of the base batteries 11. As a result, it can be ensured that the lead plate 20 can be electrically and thermally conducted to the end surfaces of the base batteries 11. In addition, there is an advantage that, when the temporarily holding portion 14 is inserted into the temporarily-holding opening 23, the temporarily holding portion 14 can serve also as a guide for positioning the lead plate 20.

### (Lead Contact Protruding Portion 24)

Not an entirely flat surface but a plurality of lead contact protruding portions 24 are formed on an interior surface of the exterior case 30, which accommodates the battery blocks. In other words, the plurality of lead contact protruding portions 24 protrude inward of the back surface of the surface plate 33, and come in contact with the battery blocks 10. The lead contact protruding portion 24 includes a contact flat surface 25 that protrudes toward the battery block 10, as shown in Fig. 9. The flat surface has a shape matching with corresponding one of the lead plates 20, and a thickness that is obtained by subtracting the thickness of the lead plate 20 from the height of the lead guiding portion 22. In addition, temporarily holding insertion openings 26 are opened on the contact flat surface 25 at the positions corresponding to the temporarily holding portions 14, which are arranged inside the peripheral-wall shapes of the lead guiding portions 22. According to this construction, it is possible to avoid interference of the contact flat surfaces 25 with the temporarily holding portions 14. As a result, the lead contact protruding portion 24 can be arranged inside the peripheral-wall shape of the lead guiding portion 22 so that the contact flat surface 25 can be brought into contact with the lead plate 20. Thus, the surface plate 33 and the lead plate 20 can be thermally connected to each other. Therefore, it is possible to provide lead heat-dissipating areas. The heat from the base batteries 11 in the battery blocks 10 or from the sub circuit board 17 can be thermally conducted through the lead heat-dissipating areas to the surface plate 33. Finally, the heat can be dissipated from the surface plate 33.

Also, the exterior case 30 includes first and second case portions 31 and 32. Each of first and second case portions 31 and 32 includes the surface plate 33. When the first and second case portions 31 and 32 are coupled to each other, the surface plates 33 are opposed to each other. The lead contact protruding portions 24 are formed on the interior surface of the surface plate 33 of each of the first and second case portions 31 and 32. According to this construction, for example, the battery blocks 10 are positioned on the first case portion 31 so that the lead contact protruding portions 24 that are formed on the first case portion 31 interior surface can be arranged inside the peripheral-wall shapes of the lead guiding portions 22, and that the lead contact protruding portions 24 that are formed on the interior surface of the second case portion 32 can be arranged inside the peripheral-wall shapes of the lead guiding portions 22 that are arranged on the opposite side of the battery block 10. After that, the first and second case portions 31 and 32 are coupled to each other. As a result, the battery holders 12 can be accurately positioned. In addition, since the battery holders 12 are sandwiched from the both sides between the lead contact protruding portions 24, the battery holders 12 can be securely held. Therefore, it can be ensured that the battery holders 12 can be mechanically stabilized. Additionally, since the lead plates 20 can be brought into tight contact with the lead contact protruding portions 24, it is possible to suppress that a thermally insulating layer such as space (i.e., air layer) is formed between the lead plate 20 and the lead contact protruding portion 24. As a result, heat from the base batteries can be directly thermally conducted to the surface plates 33 through the lead plates 20. Therefore, it is possible to efficiently dissipate the heat from the surface plates 33. According to this construction, since the lead plates 20 and the exterior case 30 can serve as thermally conductive member, it is possible to improve the heat dissipation performance without heat sink or the like that serves only as thermally conductive member. Therefore, the battery pack can be small, simple, and low cost.

In addition, it is preferable that recessed portions be formed in location corresponding to the lead contact protruding portions 24 on the opposite side of the exterior case 30 opposite to the lead contact protruding portions 24, in other words, on the surface side of the exterior case 30 as shown in the cross-sectional view of Fig. 12. According to this construction, it is not necessary to increase the thickness of the surface plate 33 of the exterior case 30 in the parts where the lead contact protruding portions 24 are arranged. As a result, since the thickness of the surface plate 33 of the exterior case 30 can be even, it is possible to prevent increase of the amount of resin material. Therefore, it is possible to prevent increase of manufacturing cost, and weight.

### (Lead Heat-Dissipating Fin 35)

As shown in Figs. 1, 3, and 12, a plurality of lead heat-dissipating fins 35 can be arranged in a recessed area 34 that is formed in a location corresponding to the lead contact protruding portion 24. The lead heat-dissipating fins 35 are spaced away from each other at a constant interval in the recessed areas 34, and protrude in a perpendicular direction from the surface of the surface plate 33. According to this construction, the plurality of heat-dissipating fins are arranged on the opposite side of the surface plate opposite to the lead contact protruding portion 24, it is possible to increase the surface area of the exposed surface of the lead heat-dissipating area. As a result, it is possible to further improve the heat-dissipating effect. The lead heat-dissipating fins 35 are arranged side by side, and extend in the vertical direction in Figs. 1 and 3. In the case where the exterior case 30 is placed in this vertical orientation shown in Figs. 1 and 3, the heat-dissipating fins extend in the vertical direction so that openings extend in the vertical direction. In this case, when heat from the exterior case 30 is dissipated, the natural convection will facilitate moving air on the surface of the exterior case along the openings. Therefore, this moving air can improve the heat-dissipating performance. According to improvement to this heat-dissipating construction, it is possible to surely provide sufficient heat-dissipating performance without providing any forcedly-air-blowing mechanism such as cooling fan to the exterior case. Therefore, it is possible to provide a battery pack that can avoid that the heat-dissipating member increases the size and the cost of the battery pack. In particular, in the case of a waterproof battery pack, it is difficult to provide the battery pack with a forcedly-air-blowing mechanism that forcedly flows cooling air by using a cooling fan. For this reason, a battery pack is useful which can cool the base batteries and the electronic components without cooling fan.

In addition, it is preferable that the protruding height of the lead heat-dissipating fins 35 be dimensioned so that the lead heat-dissipating fins 35 do not protrude from other parts of the surface plate 33, and extend in the perpendicular direction within the recessed area 34 as shown in the cross-sectional view of Fig. 12. That is, it is preferable that the protruding height of the lead heat-dissipating fins be dimensioned so that the protruding end surfaces of the heat-dissipating fins be arranged coplanar with or inside the surface of the exterior part corresponding to the non-protruding portion surface that is arranged around the periphery of the lead contact protruding portion 24. Since the height of the lead heat-dissipating fins 35 is limited so that the lead heat-dissipating fins 35 do not protrude from the surface of the surface plate 33, it is possible to avoid increase of the exterior case 30 in size. Therefore, it is possible to maintain ease of battery pack installation.

The base batteries 11 in each of the battery blocks 10 accommodated in the exterior case 30 are held with the end surfaces of the base batteries 11 being orientated in parallel to the surface plates 33 of the exterior case 30. According to this arrangement, since the both end surfaces of each of the base batteries 11 face the opposed surface plates 33 of the exterior case 30, it is possible to facilitate heat dissipation through the end surfaces of the base batteries 11 from the both sides of the exterior case 30. In particular, since the both end surfaces of the base batteries 1 are connected to the lead plates 20, which have excellent thermal conductivity, the heat can be conducted from the both end surfaces of the base batteries 1 through the lead plates 20. In addition, the heat from the lead plates 20 can be conducted to the exterior case 30, which faces the surfaces of the lead plates 20. As a result, the heat can be dissipated from the exterior case 30 surfaces.

A plurality of battery blocks 10 are arranged side by aide and are accommodated in the exterior case 30. In the battery pack shown in Figs. 3 and 4, three battery blocks 10 are orientated upright, and are arranged side by aide in the horizontal direction (side-by-side arrangement direction), when being accommodated in the exterior case 30. Space is formed above the three battery blocks 10 in the exterior case 30. The main circuit board 40 and the heat-dissipating block 42 are arranged in this space. When fastened, the main circuit board 40 and the heat-dissipating block 42 are opposed to each other as shown in the cross-sectional view of Fig. 5, and the exploded perspective view of Fig. 10. The heat-dissipating block 42 is fastened in an upright orientation in contact with the interior side of one of the surface plates 33 of the exterior case 30.

### (Main Circuit Board 40)

The main circuit board 40 includes circuits required for operating the power supply device and their component parts, elements, and the like, such as charging/discharging circuit for controlling charging/discharging current of the battery blocks 10, and the protection circuit. The main circuit board 40 can be formed from a glass epoxy plate or the like. In the main circuit board shown in Fig. 10, a communications interface for communicating with the outside, connectors, diodes, and the like are mounted on the main circuit board 40. These mounted components include heat-generating components 41, which generate a large amount of heat. Examples of the heat-generating components 41 can be provided by reverse-blocking diodes that are connected serially to the base batteries 11, transistors that switch between charging operation and discharging operation of the base batteries 11, and the like. Heat can be dissipated from the heat-generating components 41 so that the temperatures of the heat-generating components 41 can be lower than predetermined temperatures. Accordingly, heat-generating components 41 can stably operate. In order to efficiently dissipate heat generated from these heat-generating components 41, the heat-dissipating block 42 is provided. In the heat-dissipating block shown in Fig. 10, the heat-dissipating block 42 is opposed to the back surface of the main circuit board 40. A spacer 43 is interposed between the heat-dissipating block 42 and the main circuit board 40 so that the heat-dissipating block 42 is spaced away from the main circuit board 40. The heat-generating components 41 are arranged between the main circuit board 40 and the heat-dissipating block 42. In other words, in the main circuit board shown in Fig. 10, the heat-generating components 41 are mounted in the back surface of the main circuit board 40 with the heat-generating components 41 being opposed to the heat-dissipating block.

### (Heat-Dissipating Block 42)

The heat-dissipating block 42 is formed of a material having good heat conductivity, and preferably of a plate-shaped metal block. The metal block preferably has a thickness of not less than 5 mm, and is formed of a material having sufficient thermal capacity and thermal conductivity such as aluminum. In the case where the heat-dissipating block 42 is thick as compared with the main circuit board 40, heat can be thermally conducted from the main circuit board 40 and be efficiently dissipated.

### (Block Recessed Portion 44)

The heat-dissipating block 42 is thermally connected to the heat-generating components 41, which are mounted on the main circuit board 40. To achieve this, block recessed portions 44 are formed on the surface of the heat-dissipating block 42 so that the heat-generating components 41 are arranged in the block recessed portions 44. According to this construction, the heat-generating component 44 is enclosed by three enclosing surfaces of the block recessed portion 44. As a result, heat can be efficiently conducted (absorbed) from the heat-generating component 41, and be dissipated from the heat-dissipating block. To achieve this, the main circuit board 40 is orientated so that the heat-generating component 41 mounted surface of the main circuit board 40 is opposed to the recessed portion surface side of the heat-dissipating block 42. The heat-generating component 41 is mounted on this heat-generating component 41 mounted surface. In the heat-dissipating block shown in Fig. 10, the reverse-blocking diode is arranged in the block recessed portion 44. Although FETs are mounted on the main circuit board 40, the FETs are not arranged in the block recessed portions 44.

### (Thermally Conductive Paste 45)

In order to thermally connect the heat-dissipating block 42 to the heat-generating components 41, the block recessed portions 44 are filled with thermally conductive paste 45. According to this construction, since the thermally conductive paste 45 is interposed between the heat-generating components 41 and the block recessed portions 44, air layers can be eliminated which have high thermally insulation. As a result, it can be surely maintained that the heat-generating components 41 is thermally coupled to the block recessed portions 44. Silicone resin or the like can be suitably used as the thermally conductive paste 45. The block recessed portion 44 is filled with silicone resin so that the heat-generating component 41 can be completely covered with this silicone resin. Alternatively, the heat-generating component can be thermally connected to the surface of the heat-dissipating block 42 through mica, which has electrical insulation but good thermal conductivity, or an electrically-insulating but thermally conductive sheet formed of plastic. In the heat-dissipating block shown in Fig. 10, the silicone resin is injected into the block recessed portions 44 in which the reverse-blocking transistors are arranged. In addition, silicone resin 46 is additionally applied to members (e.g., FETs) that are arranged on parts of the heat-dissipating block other than the block recessed portions 44 so that these members are covered with the silicone resin 46, if necessary.

As shown in Figs. 3 and 10, the main circuit board 40 extends along the side-by-side arrangement direction of the battery blocks 10, which are arranged side by side in the transverse direction, so that the wiring distance can be short between the main circuit board 40 and battery blocks 10. In addition, it is preferable that the intervals between the circuits and components be maximized which are mounted on the main circuit board 40 and control the battery blocks 10. For example, the reverse-blocking diodes as the heat-generating components 41 are spaced away from each other. To achieve this, a plurality of block recessed portions 44 are formed so that each of the reverse-blocking diodes is arranged in corresponding one of the block recessed portions 44. According to this construction, since the heat-generating components 41, which generate a large amount of heat, are spaced away from each other, it is possible to reduce inverse influences of heat on other heat-generating components 41.

The heat-dissipating block 42 and the main circuit board 40 are spaced away from the battery blocks 10 in the exterior case 30 so that the heat-dissipating block 42 and the main circuit board 40 do not overlap the battery blocks 10. That is, as shown in Fig. 5, the heat-dissipating block 42 is orientated in a vertical orientation above the battery blocks 10 so that the contact areas between the heat-dissipating block 42 and the battery blocks 10 are minimized. As a result, it is possible to reduce the amount of heat that is thermally conducted from the heat-dissipating block 42 to the battery blocks 10. Therefore, it is possible to reduce inverse influences of the heat on the base batteries 11.

In particular, the heat-dissipating block 42 is arranged in the exterior case 30 in parallel to the surface plate 33 so that a surface of the heat-dissipating block 42 that is opposed to this surface plate 33 is thermally connected to this surface plate 33. According to this arrangement, heat can be absorbed from the heat-generating components 41 to the heat-dissipating block 42, and this heat can be dissipated from the surface plate 33. Since the heat-dissipating block 42 is directly thermally connected to this surface plate 33 of the exterior case 30, the exterior case 30 itself can be used for heat dissipation. Therefore, there is an advantage that a heat sink or the like for heat dissipation can be simplified and small, or omitted.

In addition, the main circuit board 40 is spaced away from, and does not overlap the sub circuit boards 17 each of which is provided for corresponding one of the battery blocks. Specifically, as shown in Fig. 6 or the like, each of the sub circuit boards 17 is arranged on a side surface of corresponding one of the battery blocks 10 so that the sub circuit boards 17 are arranged in the vertical orientation between battery blocks 10 or on the side surface of the battery block 10. Accordingly, the sub circuit boards 17 are orientated in parallel to the side walls of the exterior case 30. As discussed above, the main circuit board 40 is opposed to the surface plate 33. Thus, the main circuit board 40 intersects with and the sub circuit boards 17 so that the main circuit board 40 is physically separated from the sub circuit boards 17. As a result, it is possible prevent that heat is thermally conducted from the main circuit board 40 to the sub circuit board 17. Therefore, the heat from the main circuit board 40 will not have inverse influences on electronic components that are mounted in the sub circuit boards 17. Consequently, there is an advantage that these electronic components can stably operate.

### (Heat-Dissipating Block Contact Recessed Portion 47)

The surface plate 33 of the exterior case 30 has the heat-dissipating block contact recessed portion 47 that is arranged on the surface side of the surface plate 33 in a thermal connection area. The interior surface of the surface plate 33 in the thermal connection area is thermally connected to the heat-dissipating block 42. It is more preferable that a plurality of block heat-dissipating fins 48 be arranged in the heat-dissipating block contact recessed portion 47 as shown in Fig. 11. The protruding ends surfaces of the block heat-dissipating fins 48 are arranged coplanar with or inside the non-recessed portion surface that is arranged around the periphery of the heat-dissipating block contact recessed portion 47. According to this construction, the surface area can be increased by the block heat-dissipating fins 48, which protrude outward of the exterior side of the thermal connection area, so that the heat dissipation can be improved. In addition, since the height of the block heat-dissipating fins 48 is the same as or lower than parts around the periphery of the heat-dissipating block contact recessed portion 47, it is possible to avoid that the block heat-dissipating fins 48 protrude from the exterior case surface. Therefore, there is an advantage that the exterior case 30 can be small.

It is preferable that the block heat-dissipating fins 48 be formed on a part of the surface plate 33 that is different from a part of the surface plate 33 where the lead heat-dissipating fins 35 are formed. That is, the block heat-dissipating fins 48 are arranged on one of the two opposed surface plates 33, and the lead heat-dissipating fins 35 are arranged on the other one of the two opposed surface plates 33. According to this construction, heat-dissipating areas can be separately provided for battery blocks and for the heat-dissipating block. As a result, it is possible to prevent that heat is locally generated in a particular area. In addition, since the both sides of the exterior case 30 can be efficiently used as the heat-dissipating areas, it is possible to effectively dissipate heat. In other words, in the battery pack shown in Fig. 2, the recessed area and the lead heat-dissipating fins are not arranged on the hidden-side surface plate 33, while the other surface plate having the block heat-dissipating fins 48 mainly serves as a block heat dissipation area for the heat-dissipating block. However, the lead heat-dissipating fins may be formed on the both surface plates if necessary for required heat dissipation performance, and the like.

Since the battery pack includes the aforementioned heat-dissipating construction, it is possible to efficiently dissipate heat without additional high heat-dissipating structure such as large heat sink. Therefore, it is possible to provide a battery pack that can be stably used as high-output power supply device. In particular, even in the case where the exterior case 30 is a case formed of resin, which has low thermal conductivity as compared with metal cases, the heat-dissipating construction according to the present invention can achieve sufficient heat-dissipating performance. In this case, there is a great advantage from viewpoint of cost.

### Industrial Applicability

A battery pack according to the present invention can be suitably used as a backup power supply device that can be installed to computer server racks, a backup power supply device for wireless base stations such as mobile phone base stations, an electric power storage device used together with solar batteries, and the like.

### Reference Signs List

- 100: Battery pack
- 10: Battery block
- 11: Base battery
- 12, 12A, 12B: Battery holder
- 13: Battery accommodation portion
- 14: Temporarily holding portion
- 15: First holder case
- 16: Second holder case
- 17: Sub circuit board
- 18, 18B: Lead plate
- 19: Guide rib
- 20: Lead plate
- 21: Connection terminal
- 22: Lead guiding portion
- 23: Temporarily holding opening
- 24: Lead contact protruding portion
- 25: Contact flat surface
- 26: Temporarily holding insertion opening
- 27: Metal wire line
- 28: Fuse
- 29: Recessed portion;
- 29B: Protruding area
- 30: Exterior case
- 31: First case portion
- 32: Second case portion
- 33: Surface plate
- 34: Recessed area
- 35: Lead heat-dissipating fin
- 40: Main circuit board
- 41: Heat-generating component
- 42: Heat-dissipating block
- 43: Spacer
- 44: Block recessed portion
- 45: Thermally conductive paste
- 46: Silicone resin
- 47: Heat-dissipating block contact recessed portion
- 48: Block heat-dissipating fin
- 86: Main circuit board
- 87: Sub circuit board
- 88: Metal plate
- 89: Exterior case
- 90: Heat-dissipating plate
- 91: Rechargeable battery
- 92: Circuit board
- 93: Inner case
- 94: Inner pack portion
- 95: Outer case
- 96: Metal chassis
- 97: Battery holder
- 98: Battery block
- 99: Heat-generating component
- A, A: Positive/negative power supply output terminal;
- B, B: Communication terminal

## Claims

1. A battery pack comprising:
a battery block (10) that includes a plurality of base batteries (11), and a battery holder (12) having battery accommodation portions (13) each of which accommodates corresponding one of said plurality of base batteries (11);
a main circuit board (40) that is connected to said base batteries (11) of the battery block (10);
a heat-generating component (41) that is connected to said main circuit board (40);
a plate-shaped heat-dissipating block (42) that is thermally connected to said heat-generating component (41); and
an exterior case (30) that accommodates said heat-dissipating block (42) and said battery block (10),
wherein said exterior case (30) includes two opposed surface plates (33), and side walls that close peripheral parts of the surface plates (33), and has a box shape the width of which is larger than the thickness,
wherein said heat-dissipating block (42) is spaced away from said battery block (10) in said exterior case (30) so that said heat-dissipating block (42) does not overlap said battery block (10),
wherein said heat-dissipating block (42) is arranged in parallel to said surface plate (33) in said exterior case (30), and an opposed surface of said heat-dissipating block (42) opposed to said surface plate (33) is thermally connected to said surface plate (33),
wherein heat generated by said heat-generating component (41) can be conducted to said heat-dissipating block (42) so that the heat can be dissipated from said surface plate (33).

2. The battery pack according to claim 1, wherein a plurality of battery blocks are provided as said battery block (10), wherein the heat-dissipating block (42) is arranged on the longitudinal end side of the plurality of battery blocks (10).

3. The battery pack according to claim 1 or 2, wherein said heat-dissipating block (42) is a metal block having a thickness of not less than 5 mm,
wherein a block recessed portion (44) is formed in the surface of said heat-dissipating block (42), and said heat-generating component (41) is arranged in and thermally connected to this block recessed portion (44).

4. The battery pack according to claim 3, wherein said main circuit board (40) is orientated opposed to the recessed portion surface side of said heat-dissipating block (42) where the block recessed portion (44) is formed,
wherein said main circuit board (40) is orientated so that the heat-generating component (41) mounted surface of said main circuit board (40) is opposed to the recessed portion surface side of said heat-dissipating block (42), wherein the heat-generating component (41) is mounted on this heat-generating component (41) mounted surface.

5. The battery pack according to claim 3 or 4, wherein the block recessed portion (44) of said heat-dissipating block (42) is filled with thermally conductive paste (45).

6. The battery pack according to any of claims 1 to 5, wherein said heat-generating component (41) includes a diode that is serially connected to said base battery (11), wherein this diode is arranged in the block recessed portion (44) of said heat-dissipating block (42).

7. The battery pack according to any of claims 3 to 6, wherein a transistor is provided as said heat-generating component (41), and is mounted to said main circuit board (40),
wherein said main circuit board (40) is orientated so that the transistor-mounted surface of said main circuit board (40) is opposed to the block recessed portion (44) surface of said heat-dissipating block (42), wherein said transistor is mounted on the transistor-mounted surface,
wherein said transistor is arranged between the main circuit board (40) and the heat-dissipating block (42), wherein the part between the main circuit board (40) and the heat-dissipating block (42) is filled with thermally conductive paste (45) so that the transistor is thermally connected to the heat-dissipating block (42) and the main circuit board (40).

8. The battery pack according to any of claims 3 to 7, wherein the surface plate (33) of said exterior case (30) has a heat-dissipating block contact recessed portion (47) that is arranged on the surface side of the surface plate (33) in a thermal connection area, wherein the interior surface of the surface plate (33) in the thermal connection area is thermally connected to said heat-dissipating block (42), wherein a plurality of block heat-dissipating fins (48) are arranged in the heat-dissipating block contact recessed portion (47),
wherein the protruding end surfaces of said block heat-dissipating fins (48) are arranged coplanar with or inside the non-recessed portion surface that is arranged around the periphery of said heat-dissipating block contact recessed portion (47).

9. The battery pack according to any of claims 1 to 8, wherein said battery block (10) includes lead plates (20) that are arranged at positions opposed to the interior surface of the surface plate (33) of said exterior case (30), and is electrically connected to end terminals of the base batteries (11),
wherein said lead plate (20) is thermally connected to the interior surface of the surface plate (33) so that heat can be thermally conducted from the base batteries (11) through the lead plates (20) to the surface plate (33).

10. The battery pack according to claim 9, wherein said surface plate (33) has a lead protruding portion (24) that is arranged in a lead heat-dissipating area, wherein the interior surface of the surface plate (33) in the lead heat-dissipating area is thermally connected to the lead plates (20), wherein heat-dissipating fins (35) are arranged on the surface side of said surface plate (33) in the exterior side of the lead protruding portion (24),
wherein the protruding end surfaces of said heat-dissipating fins (35) are arranged coplanar with or inside the surface of the exterior part corresponding to the non-protruding portion surface that is arranged around the periphery of said lead protruding portion (24).

11. The battery pack according to claim 10, wherein said battery holder (12) includes a peripheral-wall-shaped lead guiding portion (22) for positioning said lead plate (20) in an attachment position,
wherein said lead guiding portion (22) partially overlaps an opening plane of at least one of said plurality of said battery accommodation portions (13).

12. The battery pack according to claim 11, wherein said battery holder (12) further includes a temporarily holding portion (14) that partially overlaps an opening plane of another of said plurality of said battery accommodation portions (13) that is located inside the peripheral wall of said lead guiding portion (22) and is not partially overlapped by said lead guiding portion (22),
wherein said lead plate (20) has a temporarily holding opening (23) that is formed at a position corresponding to said temporarily holding portion (14) and in a size capable of receiving the temporarily holding portion (14).

13. The battery pack according to claim 12, wherein a plurality of lead contact protruding portions (24) protrude toward said battery block (10) from a surface of said surface plate (33) opposed to the battery block (10),
wherein said lead contact protruding portion (24) has a height and shape which can be fitted into the peripheral wall of said lead guiding portion (22), and has a temporarily holding insertion opening (26) that is opened at a position opposed to said temporarily holding portion (14).

14. The battery pack according to claim 13, wherein said block heat-dissipating fins (48) are arranged on one of said two opposed surface plates (33), and said lead heat-dissipating fins (35) are arranged on the other one of said two opposed surface plates (33).

15. The battery pack according to any of claims 1 to 14, wherein a plurality of battery blocks are provided as said battery block (10), wherein each of said battery blocks (10) includes a sub circuit board (17) that is connected to the base batteries (11) in the corresponding one of the battery blocks (10),
wherein said sub circuit board (17) can be located between said battery blocks (10), and said main circuit board (40) is arranged on the end surface side of the battery blocks (10) and is orientated intersecting with said sub circuit boards (17).

16. The battery pack according to any of claims 1 to 15, wherein said exterior case (30) includes a first case portion (31) and a second case portion (32) each of which includes the surface plate (33) (4a) with a rectangular shape and a side wall portion (4b) arranged along in the periphery of the surface plate (33), wherein the first case portion (31) and the second case portion (32) are coupled to each other so that said exterior case (30) accommodates the battery block (10), the main circuit board (40), and the heat-generating component (41).

17. The battery pack according to any of claims 1 to 16, wherein said exterior case (30) is formed of electrically-insulating resin.

18. A battery pack comprising:
a plurality of battery blocks (10) each of which includes a plurality of base batteries (11), and a battery holder (12) having battery accommodation portions (13) each of which accommodates corresponding one of said plurality of base batteries (11);
a main circuit board (40) that is connected to said base batteries (11) of the battery block (10); and
an exterior case (30) that accommodates said battery blocks (10),
wherein said exterior case (30) includes two opposed surface plates (33), and side walls that close peripheral parts of the surface plates (33), and has a box shape,
wherein each of said battery blocks (10) includes a sub circuit board (17) that is connected to the base batteries (11) in the corresponding one of the battery blocks (10),
wherein said main circuit board (40) is arranged along the side-by-side arrangement direction of said battery blocks (10), which are arranged side by side, on the end surface side of the battery blocks (10), and is orientated intersecting with said sub circuit boards (17).
